# EUROPEAN PATENT APPLICATION

(11) **EP 4 357 683 A1**
(43) Date of publication of application: **24.04.2024**
(21) Application number: 23203172.4
(22) Date of filing: 12.10.2023
(51) Int. Cl.: F24D 3/10, F16K 1/00

(54) **SYSTEM AND RELATED METHOD FOR CALIBRATING THE BALANCING PRESSURE OF A THERMO-HYDRAULIC SYSTEM**

(30) Priority: 20.10.2022 IT 202200021621
(71) Applicant: Pres-Block S.P.A., 10040 Caselette (IT)
(72) Inventor: NICOLINO, Aldo, 10040 Caselette (TO) (IT)
(74) Representative: Studio Torta S.p.A.

(57) **Abstract**

A calibration system (20) for the calibration of the balancing pressure of a thermo-hydraulic system (1) is described, the system (20) comprises: a bypass duct (16) fluidly interposable between a delivery manifold (5) and a return manifold (6) of the thermo-hydraulic system (1); a balancing valve (17) comprising a shutter (18) arrangeable in an opening position to allow the flow of the operative fluid through the bypass duct (16) and in a closing position to prevent the flow of the operative fluid through the bypass duct (16); and a detector member (19) for detecting a physical quantity correlated to the flow of the operative fluid within the bypass duct (16); the shutter (18) is configured to automatically move from the closing position to the opening position when a predetermined operative pressure, which acts in use against the shutter (18) itself and defines said balancing pressure, is reached within the bypass duct (16); the detector member (19) and the balancing valve (17) are fluidly coupled to one another by means of the bypass duct (16), so that a variation of said physical quantity detectable by means of the detector member (19) corresponds to a displacement of the shutter (18) from the closing position towards the opening position.

## Description

### CROSS-REFERENCE TO RELATED APPLICATIONS

This patent application claims priority from Italian patent application no. 102022000021621 filed on October 20, 2022, the entire disclosure of which is incorporated herein by reference.

### TECHNICAL FIELD

The present invention relates to a calibration system for the calibration of the balancing pressure of a thermo-hydraulic system, preferably a built-in floor or ceiling system, to which the following description will make explicit reference without thereby losing generality.

In particular, the present invention relates to a pressure calibration system which causes the automatic opening of a balancing valve within the hydraulic circuit of the thermo-hydraulic system.

The present invention also relates to a method for calibrating the balancing pressure of a thermo-hydraulic system.

### STATE OF THE ART

Thermo-hydraulic systems for indoor heating are well known, e.g., built-in floor or ceiling thermo-hydraulic systems.

These systems usually comprise:
- a boiler or a heat pump;
- a hydraulic circuit which fluidly connects the boiler or the heat pump to the utilities to be heated or cooled and within which an operative fluid, such as water or glycol, is recirculated by pumping means;
- a delivery manifold, placed along the circuit fluidly downstream of the boiler or the heat pump and upstream of the utilities and configured to distribute the heated or cooled operative fluid, coming from the boiler or the heat pump, to the individual utilities;
- a return manifold placed along the circuit fluidly downstream of the utilities and upstream of the boiler or the heat pump and configured to collect the fluid coming from the utilities and feed it to the boiler or the heat pump.

For example, each utility is defined by a different room or area of a dwelling, office, or building in general.

The delivery manifold typically comprises a manifold pipe receiving a delivery pipe which places it in fluidic communication with the boiler or the heat pump. A plurality of delivery branches start from the manifold pipe, each one directed towards a respective utility, for example defined by a coil pipe arranged in the floor of a given room in the house or by a coil pipe arranged in the ceiling of the same.

Generally, the delivery manifold also comprises a plurality of delivery valves, usually regulating the quantity of operative fluid to be admitted, each of which is fluidly interposed between the manifold pipe and a related delivery branch. Each delivery valve can be controlled between an opening position and a closing position to allow or prevent, respectively, the flow of the fluid to the related delivery branch.

The return manifold typically comprises a manifold pipe, which receives a plurality of return branches, each coming from a respective utility, and from which a return pipe starts, which places it in fluidic communication with the boiler or the heat pump.

Generally, the return manifold also comprises a plurality of return valves, each of which is fluidly interposed between a related return branch and the manifold pipe.

Each return valve can be controlled between an opening position and a closing position to allow or prevent, respectively, the flow of the fluid to the return pipe and the boiler.

Therefore, each utility is fluidly interposed between a respective delivery branch and a respective return branch, and thereby is associated with a pair of valves, i.e., a delivery valve and a return valve.

In use, when the desired temperature is reached at a utility, it is necessary to interrupt the supply of heated or cooled operative fluid delivered to that utility.

For this purpose, the respective return valve is closed, for example.

Alternatively, a thermostatic valve of the on/off type typically located along the respective return branch is used. When this thermostatic valve is closed, the flowrate in the respective delivery and return branches is stopped.

This causes a change in pressure, in particular an increase in pressure, within the circuit, as the pumping means continue to operate under the same conditions.

This pressure imbalance following the closure of one or more of the utilities can affect the nominal operation of the utilities that are still "open", causing a higher flowrate towards the latter than the expected nominal flowrate.

In order to balance the pressure within the circuit, known systems comprise a balancing system defining a bypass to selectively connect the delivery manifold directly to the return manifold, so that the excess fluid recirculates without passing through the utilities, thus discharging the excess fluid flowrate and balancing the pressure within the circuit.

According to a known configuration, the balancing system includes a plurality of self-balancing valves, which are configured to maintain a constant flowrate as the operative pressure changes. Each self-balancing valve is arranged along a respective return branch to regulate the respective flowrate through it, regardless of the pressure variation that occurs within the circuit.

However, such a balancing system is somewhat complicated and involves the installation of a large number of self-balancing valves (one for each branch), resulting in increased installation and maintenance costs, and leading to a decrease in the overall reliability of the system.

In addition, these self-balancing valves are quite complex and expensive.

According to an alternative configuration, the balancing system comprises a single bypass duct selectively connecting the delivery manifold to the return manifold, and a single bypass valve operatively coupled to the bypass duct.

In use, when a certain overpressure, which defines the balancing pressure, is reached, the bypass valve opens automatically, discharging the excess flowrate.

The Applicant noted that the initial calibration of this balancing system is particularly complicated and cumbersome, as the service technician, in order to calibrate the bypass valve, needs to know the precise operative balancing pressures for each individual appliance, which are often depicted in complicated diagrams, which may also be difficult to interpret. Calibration is therefore prone to error.

### OBJECT AND SUMMARY OF THE INVENTION

The object of the present invention is to provide a system, and a related method, for calibrating the balancing pressure of a thermo-hydraulic system, which are highly reliable and cost-effective, and allow at least some of the above-mentioned drawbacks related to the well-known thermo-hydraulic systems to be overcome.

According to the invention, this object is achieved by means of a system, and a related method, for calibrating the balancing pressure as claimed in the attached independent claims.

### BRIEF DESCRIPTION OF THE DRAWINGS

For a better understanding of the present invention, a preferred, non-limiting embodiment thereof will be described below purely by way of example and with the aid of the accompanying drawings, wherein:
- Figure 1 is a hydraulic diagram of a thermo-hydraulic system comprising a calibration system for the calibration of the balancing pressure made according to the present invention; and
- Figures 2 to 5 are schematic, partially sectioned side views, in enlarged scale and with parts removed for clarity, of the calibration system during distinct and successive operative conditions.

### DETAILED DESCRIPTION

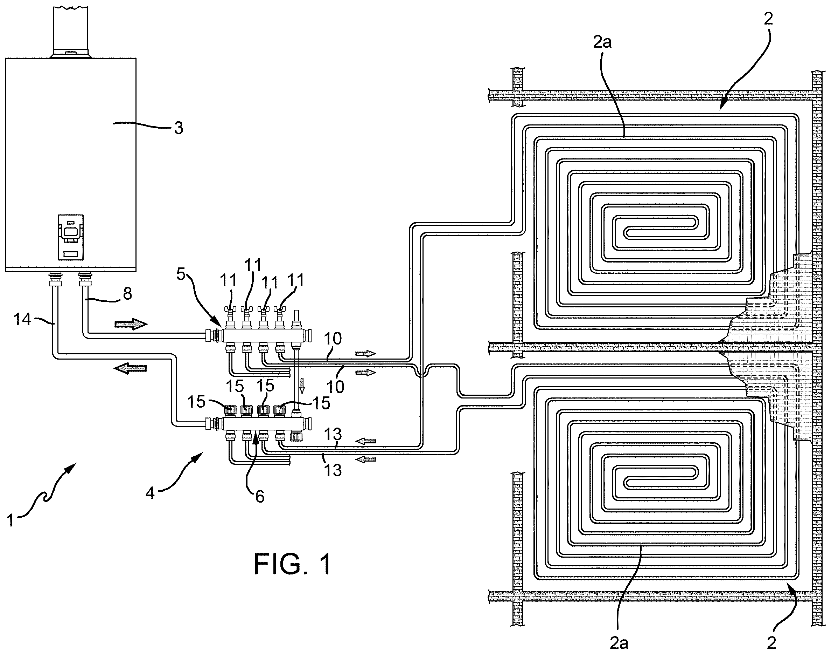

With reference to Figure 1, number 1 indicates, as a whole, a thermo-hydraulic system for heating or cooling a plurality of utilities 2, in particular a plurality of utilities 2 of an indoor space.

In one embodiment, each utility 2 is defined by a different room or area of a dwelling, office, or building in general.

Preferably, the system 1 is a built-in floor or ceiling system, to which the following description will make explicit reference without thereby losing generality.

More precisely, as shown schematically in Figure 1, each utility 2 consists of a coil pipe 2a arranged in the floor (or ceiling) of a given area or room of a dwelling.

The system 1 comprises a boiler 3.

In an alternative embodiment, the system 1 comprises a heat pump (not shown) instead of a boiler 3. In this way, the system 1 could be used to heat or cool the utilities 2.

Therefore, in the present specification, the terms "boiler" and "heat pump" can be used interchangeably.

The system 1 also comprises:
- a hydraulic circuit 4 which fluidly connects the boiler 3 (or the heat pump) to the utilities 2 to be heated and within which an operative fluid, such as water or glycol, is recirculated by pumping means (known per se and not shown);
- a delivery manifold 5, placed along the circuit 4 fluidly downstream of the boiler 3 and upstream of the utilities 2 and configured to distribute the heated or cooled fluid coming from the boiler 3 to the individual utilities 2; and
- a return manifold 6 placed along the circuit 4 fluidly downstream of the utilities 2 and upstream of the boiler 3 and configured to collect the fluid coming from the utilities 2 and feed it to the boiler 3.

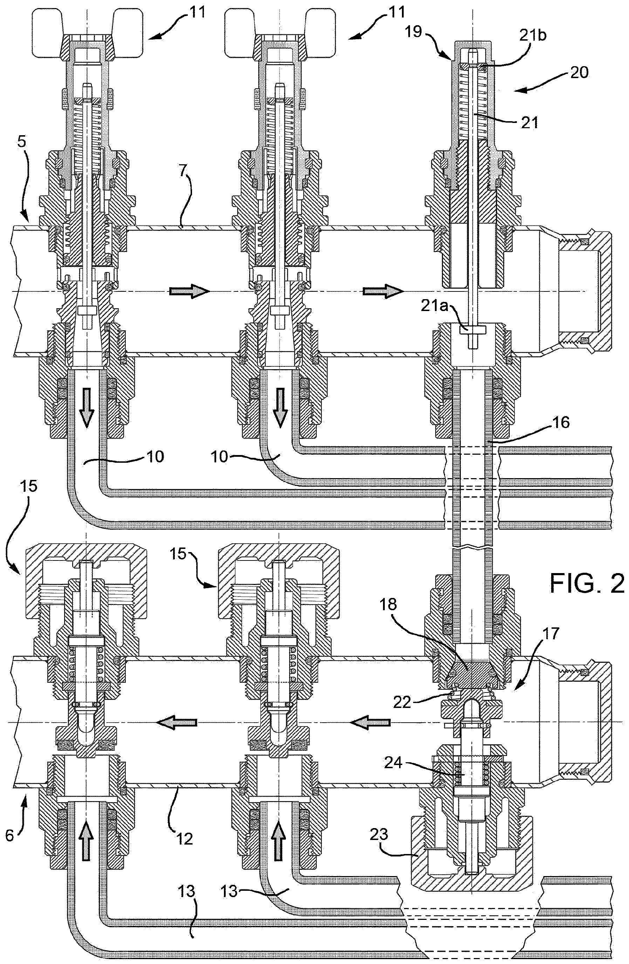

As can be seen in Figures 2 to 5, the delivery manifold 5 comprises a manifold pipe 7 receiving a delivery pipe 8 which places it in fluidic communication with the boiler 3 and from which pipe 7 a plurality of delivery branches 10 start, each one directed towards a respective utility 2.

The delivery manifold 5 also comprises a plurality of delivery valves 11, each of which is fluidly interposed between the manifold pipe 7 and a related delivery branch 10. Each delivery valve 11 can be controlled between an opening position and a closing position to allow the flow of the fluid to the related delivery branch 10 to be regulated or prevented, respectively.

More precisely, each valve 11 also comprises a flowmeter of the known type (for example, the one shown in Figures 2 to 5) so as to allow the adjustment of an operative fluid flowrate, which is pre-set by the technician who installs and calibrates the system 1 based on the size and exposure of the related utility 2 associated with the valve 11.

Similarly, the return manifold 6 comprises a manifold pipe 12, which receives a plurality of return branches 13, each coming from a respective utility 2, and from which a return pipe 14 starts, which places it in fluidic communication with the boiler 3.

The return manifold 6 also comprises a plurality of return valves 15, each of which is fluidly interposed between a related return branch 13 and the manifold pipe 12.

Each return valve 15 can be controlled between an opening position and a closing position to allow or prevent, respectively, the flow of the fluid to the return pipe 14 and, through this, to the boiler 3.

In the light of the above, each utility 2 is fluidly interposed between a respective delivery branch 10 and a respective return branch 13, as schematized in Figure 1.

In this way, each utility 2 is associated with a respective pair of valves 11, 15, i.e., a delivery valve 11 and a return valve 15.

In use, the operative fluid is recirculated within the circuit 4 at a certain nominal operative pressure.

In use, when the desired temperature is reached at a utility 2, it is necessary to interrupt the supply of heated or cooled operative fluid delivered to that utility.

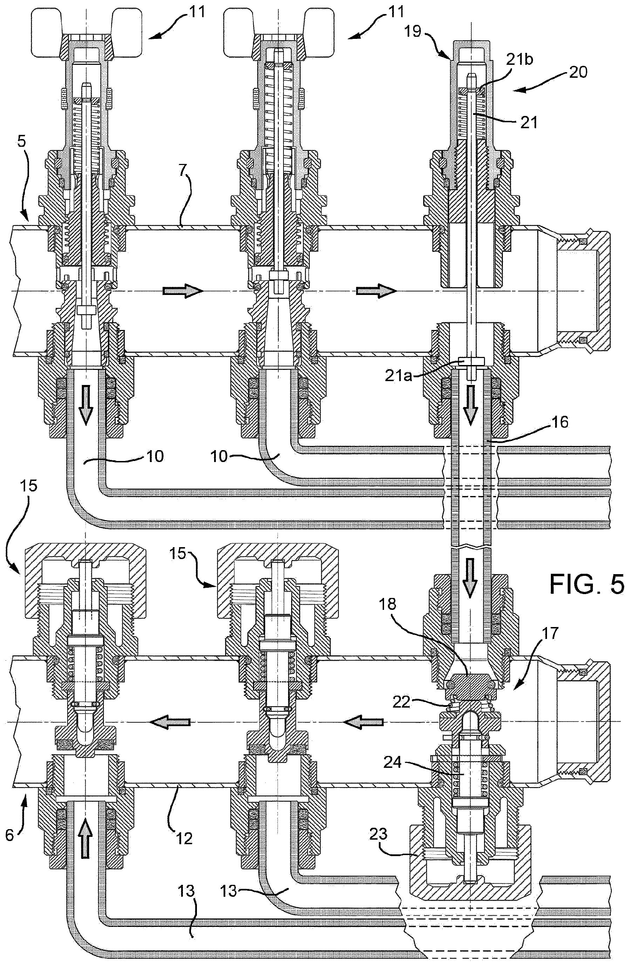

For this purpose, the respective return valve 15 is closed, for example, as shown schematically in Figure 5.

More precisely, the system 1 comprises a control unit (not shown) connected to a respective thermostat of the known type located at the aforesaid utility 2. Once the desired temperature has been reached, the control unit, upon receiving the temperature signal from the thermostat, commands the closure of the relevant return valve 15, effectively interrupting the fluid flowrate in the respective return branch 13, and therefore in the relevant delivery branch 10, and therefore, at the utility 2 in question.

Alternatively, a thermostatic valve of the on/off type located along the respective return branch 13 is used.

As explained in the introductory part of the present description, the operative pressure within the circuit 4 varies as a result of the closure of one or more utilities 2. In order to maintain constant flowrates at the utilities still open, it is therefore necessary to balance the operative pressure.

For this purpose, the system 1 includes a pressure balancing system comprising:
- a bypass duct 16 defining a selective, fluidic connection between the delivery manifold 5 and the return manifold 6, i.e., fluidly interposed between the two for allowing a direct passage of operative fluid from the delivery manifold 5 to the return manifold 6; and
- a balancing valve 17 operatively coupled to the bypass duct 16 and comprising a shutter 18 arrangeable in an opening position to allow the flow of the operative fluid through the bypass duct 16 and in a closing position to prevent the flow of the operative fluid through the bypass duct 16.

In use, when a certain overpressure, which defines the balancing pressure, is reached within the circuit 4, the balancing valve 17 opens automatically, discharging the excess flowrate from the delivery manifold 5 to the return manifold 6, without it passing through any utility 2.

It should be noted that "balancing pressure" is intended to mean the pressure causing the automatic opening of the balancing valve 17.

It is therefore important to perform a correct calibration of the balancing pressure at which the valve 17 automatically opens. This balancing pressure, in fact, varies according to the conditions under which the system 1 is installed, since the number of utilities 2, the extension of the branches and pipes, and the exposure of the utilities 2 may vary.

For this purpose, the system 1 is provided with a calibration system 20 for the calibration of the balancing pressure. According to the invention, the calibration system 20 comprises:
- the bypass duct 16;
- the balancing valve 17; and
- a detector member 19 for detecting a physical quantity correlated to the flow of the operative fluid within the bypass duct 16.

In particular, the shutter 18 is configured to automatically move from the closing position to the opening position when a predetermined operative pressure, which acts in use against the shutter 18 itself and defines the aforesaid overpressure or balancing pressure, is reached within the bypass duct 16.

According to the invention, the detector member 19 and the balancing valve 17 are fluidly coupled to one another by means of (i.e., through) the bypass duct 16, so that a variation of said physical quantity detectable by means of the detector member 19 corresponds to a displacement of the shutter 18 from the closing position towards the opening position.

In detail, the detector member 19 is configured so that the displacement of the shutter 18 from the closing position to the opening position causes a variation in the detectable physical quantity.

In greater detail, the detector member 19 is configured to detect a variation in the physical quantity when the balancing pressure is reached.

According to this preferred, non-limiting embodiment, the detector member comprises, and in particular is defined by, a flowmeter 19 operatively coupled (in particular fluidly connected) to the bypass duct 16.

Consequently, the above physical quantity is defined by a flowrate of the operative fluid through the bypass duct 16.

In detail, the flowmeter 19 comprises a stem 21 having a first end portion 21a which engages the bypass duct 16 and a second end portion 21b integral with the first portion 21a and defining a detectable indicator of a value of the aforementioned flowrate.

Conveniently, the flowmeter 19 comprises a cap, suitably transparent, equipped with a graduated scale; the indicator 21b is visible through the cap, so that a displacement thereof relative to the graduated scale is easily and immediately detectable by an operator.

The stem 21 can be displaced by the flow of the operative fluid through the bypass duct 16. In particular, the flow interacts with the first portion 21a, which is displaced (downwards in Figures 2 to 5), thereby causing a displacement of the indicator 21b.

The displacement of the indicator 21b defines the detectable variation of the above-mentioned fluid flowrate through the bypass duct 16.

According to an alternative embodiment, not shown, the detector member 19 comprises a pressure gauge operatively coupled (in particular fluidly connected) to the bypass duct 16. In this case, the physical quantity is defined by the pressure of the operative fluid within the bypass duct 16 itself.

As shown in Figures 2 to 5, the balancing valve 17 further comprises:
- elastic means, for example a coil spring 22, coupled to the shutter 18 for loading it elastically towards the closing position; and
- an adjustment member, for example a ring nut 23, coupled to the spring 22.

The ring nut 23 is actuatable, for example manually by an operator, for adjusting the stiffness of the spring 22 to calibrate an elastic return force thereof, opposite in use to the aforementioned operative pressure, so as to cause the displacement of the shutter 18 from the closing position to the opening position and allow the aforementioned flow through the bypass duct 16, when the operative pressure exceeds the return force of the spring 22.

More precisely, the valve 17 comprises a pusher 24 coupled to the ring nut 23 and acting on the spring 22 to vary its preload, i.e., to compress or release it.

In other words, the balancing valve 17 defines a check valve whose opening pressure is adjustable by means of the ring nut 23.

According to the invention, the calibration system 20 is configured to calibrate the above-mentioned balancing pressure of the system 1 by adjusting the stiffness of the spring 22 and detecting the above-mentioned flowrate, i.e., the above-mentioned physical quantity related to the flow through the bypass duct 16.

According to an alternative embodiment, not shown, the shutter is defined by an elastic membrane, and the elastic means are defined by the membrane itself. The adjustment member is defined by a pusher or piston acting on the membrane to modify its stiffness.

The operation of the calibration system 20 according to the present invention will be described below, with particular reference to Figures 2 to 5 and to an initial condition in which all the utilities 2 are open, all the return valves 15 (and the delivery valves 11) are in the opening position, and in which the shutter 18 is in the closing position (Figure 2).

In this condition, a certain operative pressure acts against the shutter 18. The elastic return force acting on the shutter 18 is such that the shutter 18 remains in the closing position.

To perform the calibration, the operator actuates the ring nut 23 of the valve 17 to adjust the stiffness of the spring 22 and modify its elastic return force.

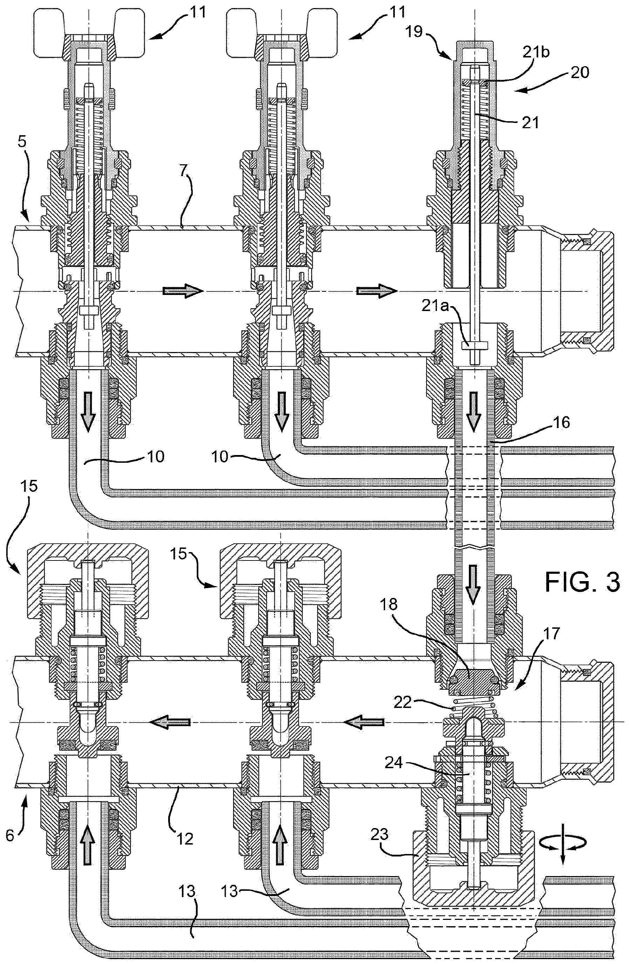

When the elastic return force falls below a threshold value, meaning that the operative pressure is greater than the elastic return force, the shutter 18 moves from the closing position to a minimum opening position. As a result, a fluid flowrate (though minimal) is established through the bypass duct 16. This flowrate is detectable because it causes a displacement of the stem 21 and therefore of the indicator 21b (Figure 3).

A variation in the flowrate is thus defined, which is detectable by the operator simply by keeping an eye on the flowmeter 19 while actuating the ring nut 23.

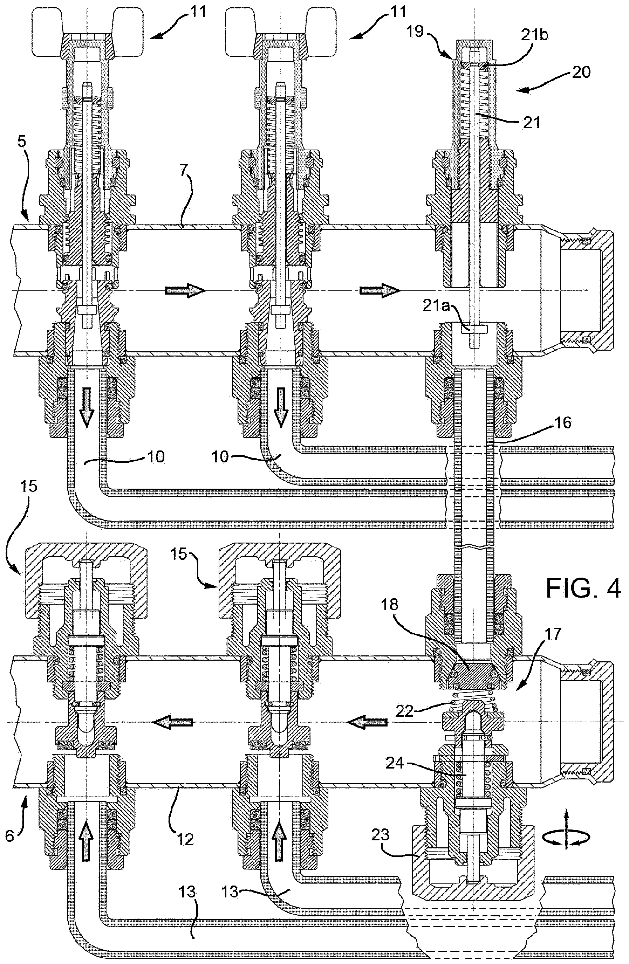

At this point, the operator actuates the ring nut 23 in the opposite direction, to close the shutter 18 again, i.e., to ensure that the elastic return force is in equilibrium with the operative pressure. According to the invention, the operator actuates the ring nut 23 in this direction until the (oscillatory) movement of the indicator 21b is stopped completely (Figure 4).

The shutter 18 thus reaches an equilibrium condition in the closing position.

At this point, a slight increase in pressure within the circuit 4 will cause the equilibrium condition to be exceeded and the shutter 18 to open. For example, the closing of a return valve 15 after the desired temperature has been reached at a utility 2 causes overpressure within the circuit 4. As a result, the shutter 18 automatically moves to the opening position and the excess flowrate is discharged through the bypass duct 16 (Figure 5). This overpressure will be the balancing pressure, which is easily calibrated in this way.

In the light of the above, it appears that the calibration system 20 according to the present invention allows a method for calibrating the balancing pressure of a thermo-hydraulic system to be implemented, the method comprising the steps of:
- circulating an operative fluid along a hydraulic circuit of the thermo-hydraulic system comprising a delivery manifold, a return manifold and a bypass duct fluidly interposed between these two for selectively allowing a direct passage of the operative fluid from the delivery manifold to the return manifold;
- closing, in particular closing in a fluid-tight manner, the bypass duct by means of a shutter of a balancing valve;
- establishing an operative pressure within the hydraulic circuit and acting against the shutter;
- exerting an elastic return force on the shutter to load it elastically towards a closing position for closing the bypass duct, so as to counteract the operative pressure and prevent a flow of the operative fluid through the bypass duct;
- adjusting the elastic return force until the elastic return force is less than the operative pressure (i.e., as long as the elastic return force remains greater than the operative pressure, thus interrupting the adjustment when the elastic return force becomes less than the operative pressure), to temporarily establish the flow of operative fluid through the bypass duct;
- detecting a variation of a physical quantity correlated to said flow established by means of, and during, the step of adjusting.

In detail, the method comprises the step of:
- calibrating said balancing pressure by means of the step of adjusting and the step of detecting.

In fact, in use, the operator calibrates the balancing pressure by acting on the ring nut 23 and keeping an eye on the flowmeter 19 to detect a variation in the flowrate via a displacement of the indicator 21b.

Preferably:
- the exerting step is performed by elastic means coupled to the shutter;
- the adjusting step comprises adjusting the stiffness of the elastic means to calibrate the elastic return force thereof; and
- the method comprises moving the shutter from the closing position to an opening position and allowing said flow through the bypass duct, by means of the step of adjusting.

According to this preferred, non-limiting embodiment, the step of adjusting comprises decreasing the elastic return force.

Therefore, the method preferably further comprises the steps of:
- interrupting the adjusting step upon detection of said variation of said physical quantity; and
- increasing, after the step of interrupting, the elastic return force until the elastic return force is in equilibrium with the operative pressure, to prevent said flow when said operative pressure is established within the hydraulic circuit and to allow said flow when a balancing pressure greater than the operative pressure is established in the hydraulic circuit.

The advantages enabled by the calibration system 20 and the related calibration method according to the present invention will be apparent from an examination of the features thereof.

In particular, due to the combined presence of the ring nut 23, which allows the return force acting on the shutter 18 to be adjusted, and the detector member 19, the operation for calibrating the balancing pressure of the system 1 is considerably simplified.

In fact, it is sufficient for the operator to decrease the stiffness of the spring 22 until a variation in the flowrate becomes detectable via the flowmeter 19.

In this way, the need to follow or interpret a multiplicity of diagrams characteristic for each system to be calibrated is lessened, and in particular eliminated.

This results in a significant reduction in the risk of calibration errors by the operator, as well as considerable time savings.

In addition, the calibration system 20 according to the invention is considerably less complicated, streamlined, reliable and cost-effective than some known configurations which comprise a large number of components.

Furthermore, installation and maintenance time and costs are significantly reduced.

It is clear that modifications and variations can be made to the calibration system 20 described and illustrated herein, and to the related calibration method, without thereby departing from the scope of protection defined by the claims.

## Claims

1. A calibration system (20) for the calibration of the balancing pressure of a thermo-hydraulic system (1), the calibration system (20) comprising:
- a bypass duct (16) fluidly interposable between a delivery manifold (5) and a return manifold (6) of the thermo-hydraulic system (1) for allowing a direct passage of operative fluid from the delivery manifold (5) to the return manifold (6);
- a balancing valve (17) comprising a shutter (18) arrangeable in an opening position to allow the flow of the operative fluid through the bypass duct (16) and in a closing position to prevent the flow of the operative fluid through the bypass duct (16); and
- a detector member (19) for detecting a physical quantity correlated to the flow of the operative fluid within the bypass duct (16);
wherein the shutter (18) is configured to automatically move from the closing position to the opening position when a predetermined operative pressure, which acts in use against the shutter (18) itself and defines said balancing pressure, is reached within the bypass duct (16);
and wherein the detector member (19) and the balancing valve (17) are fluidly coupled to one another by means of the bypass duct (16), so that a variation of said physical quantity detectable by means of the detector member (19) corresponds to a displacement of the shutter (18) from the closing position towards the opening position.

2. The calibration system as claimed in claim 1, wherein the balancing valve (17) comprises:
- elastic means (22) coupled to the shutter (18) for loading it elastically towards the closing position;
- an adjustment member (23) coupled to the elastic means (22) and actuatable for adjusting the stiffness of the elastic means (22) to calibrate an elastic return force thereof, opposite in use to said operative pressure, so as to cause the displacement of the shutter (18) from the closing position to the opening position and allow said flow;
and wherein the calibration system (20) is configured to calibrate said balancing pressure by adjusting said stiffness of the elastic means (22) and by detecting said physical quantity.

3. The calibration system as claimed in claim 1 or 2, wherein the detector member comprises a flowmeter (19) operatively coupled to the bypass duct (16), the physical quantity being defined by a flowrate of the operative fluid through the bypass duct (16).

4. The calibration system as claimed in claim 3, wherein the detector member (19) comprises a stem (21) having a first end portion (21a) which engages the bypass duct (16) and a second end portion (21b) integral with the first end portion (21a) and defining a detectable indicator (21b) of a value of said flowrate;
the stem (21) being movable by said flow of the operative fluid through the bypass duct (16) for determining a displacement of the indicator (21b), the displacement of the indicator (21b) defining the detectable variation of said flowrate.

5. The calibration system as claimed in claim 1 or 2, wherein the detector member (19) comprises a pressure gauge operatively coupled to the bypass duct (16), the physical quantity being defined by the pressure of the operative fluid within the bypass duct (16).

6. A thermo-hydraulic system (1) for heating or cooling a plurality of utilities (2), the system (1) comprising:
- a boiler (3) or a heat pump;
- a hydraulic circuit (4) which fluidly connects the boiler (3) or the heat pump to the utilities (2) to be heated or cooled and which is configured to circulate an operative fluid;
- a delivery manifold (5), placed along the circuit (4) fluidly downstream of the boiler (3) and upstream of the utilities (2) and configured to distribute the operative fluid coming from the boiler (3) or from the heat pump to the individual utilities (2);
- a return manifold (6) placed along the circuit (4) fluidly downstream of the utilities (2) and upstream of the boiler (3) or of the heat pump and configured to collect the operative fluid coming from the utilities (2) and feed it to the boiler (3) or to the heat pump; and
- a balancing pressure calibration system (20) as claimed in any one of the preceding claims;
wherein the bypass duct (16) fluidly connects, selectively by means of the balancing valve (17), the delivery manifold (5) to the return manifold (6).

7. A method for calibrating the balancing pressure of a thermo-hydraulic system (1), the method comprising the steps of:
- circulating an operative fluid along a hydraulic circuit (4) of the thermo-hydraulic system comprising a delivery manifold (5), a return manifold (6) and a bypass duct (16) fluidly interposed between these two for selectively allowing a direct passage of the operative fluid from the delivery manifold (5) to the return manifold (6);
- closing the bypass duct (16) by means of a shutter (18) of a balancing valve (17);
- establishing an operative pressure within the hydraulic circuit (4) acting against the shutter (18);
- exerting an elastic return force on the shutter (18) to load it elastically towards a closing position for closing the bypass duct (16), so as to counteract the operative pressure and prevent a flow of the operative fluid through the bypass duct (16);
- adjusting the elastic return force until the elastic return force is less than the operative pressure, to temporarily establish the flow of operative fluid through the bypass duct (16);
- detecting a variation of a physical quantity correlated to said flow established by means of, and during, the step of adjusting.

8. The method as claimed in claim 7, and comprising the step of:
- calibrating said balancing pressure by means of the step of adjusting and the step of detecting.

9. The method as claimed in claim 7 or 8, wherein the step of exerting is performed by elastic means (22) coupled to the shutter (18);
wherein the step of adjusting comprises adjusting the stiffness of the elastic means (22) to calibrate the elastic return force thereof;
and wherein the method comprises moving the shutter (18) from the closing position to an opening position and allowing said flow through the bypass duct (16), by means of the step of adjusting.

10. The method as claimed in any one of claims 7 to 9, wherein the step of adjusting comprises decreasing the elastic return force;
and wherein the method further comprises the steps of:
- interrupting the adjusting step upon detection of said variation of said physical quantity; and
- increasing, after the step of interrupting, the elastic return force until the elastic return force is in equilibrium with the operative pressure, to prevent said flow when said operative pressure is established within the hydraulic circuit (4) and to allow said flow when a balancing pressure greater than the operative pressure is established in the hydraulic circuit (4).
